# EUROPEAN PATENT APPLICATION

(11) **EP 4 537 788 A1**
(43) Date of publication of application: **16.04.2025**
(21) Application number: 24205611.7
(22) Date of filing: 09.10.2024
(51) Int. Cl.: A61C 8/00

(54) **ORTHODONTIC SCREW FOR EXTRA-ALVEOLAR SKELETAL ANCHORING**

(30) Priority: 10.10.2023 IT 202300021048
(71) Applicant: Orteam S.p.A. a socio unico, 20125 Milano (IT)
(72) Inventor: DERTON, Nicola, 32043 Cortina (IT)
(74) Representative: De Bortoli, Tiziano

(57) **Abstract**

The invention relates to an orthodontic anchor screw (100) for extra-alveolar skeletal anchorage comprising a threaded shank (10) configured to be screwed into a bone tissue and a head (20), which, in use, protrudes from the bone tissue and comprises an engagement portion (24) for orthodontic traction and/or thrust elements. A through opening (25) is formed in said engagement portion (24) for orthodontic traction and/or thrust elements, wherein said through opening (25) extends substantially along a direction (Y) orthogonal to a longitudinal axis (X) of the anchor screw (100) and comprises a section (25B) having a polygonal cross section, for stably receiving an orthodontic sector.

## Description

### Technical field of the invention

The present invention relates, in general, to the technical field of orthodontic apparatuses. More in particular, the present invention relates to an orthodontic screw for extra-alveolar skeletal anchorage for use in an orthodontic apparatus.

### Prior art of the invention

In orthodontic practice, it is common to use apparatuses to correct dental malocclusions and, more in general, tooth positioning defects. In fact, such defects are a cause of discomfort for the person affected by them, since they can determine alterations in the appearance of the face and, at the same time, can cause neck pain, headaches, tinnitus and back pain. Dental malocclusions can also lead to an increased risk of tooth decay and gum disease, such as periodontal disease or inflammation, respiratory pathological conditions such as asthma, bronchitis, chronic cough, sinusitis and rhinitis, or the tendency to breathe with the mouth open. From an operational perspective, orthodontic apparatuses are configured so as to exert a traction or thrust force on one or more teeth, so as to gradually move them over time into the correct position or, as in the case of interceptive orthodontics, so as to obtain functional or skeletal responses in the growing subject.

The orthodontic apparatuses traditionally used can be of the movable or fixed type and are specifically configured for each person, depending on the specific treatment that he or she requires.

In the case of significant anomalies in the positioning of the teeth, it is generally preferable to use fixed apparatuses, which comprise a plurality of attachments or brackets that are glued or cemented onto the teeth, and a plurality of traction and/or thrust elements, consisting for example of elastic or metal wires or hooks, which are fixed to the incorrectly positioned teeth by means of the aforesaid attachments and secured to appropriate anchorages, so as to apply traction and/or thrust forces on one or more teeth for bringing them into the correct position. Recently, intra-oral anchorages have been developed, which involve the use of orthodontic anchor screws or TADs (Temporary Anchorage Device Systems), which are temporarily fixed to the intra-alveolar or extra-alveolar bone tissue (infrazygomatic crest and buccal shelf first and foremost) and removed when the poorly positioned teeth have reached the correct position, or when the desired skeletal goal has been achieved (for example, *"en masse"* distalization of the upper dental arch).

TADs are of direct and indirect type and allow to overcome some of the limitations of traditional apparatuses and to obtain tooth movements considered difficult to achieve until now, with the advantage of easy insertion. Furthermore, TADs are able to provide the professional with the right tool for each different clinical case each time, based on the diagnostic framework and the treatment plan.

Direct TADs *(International Orthodontics 2021, Denton, etal.)* are increasingly combined with orthodontic sectors, cantilevers, pseudoankyloses, or skeletally supported single force application point translators *(JCO 2017. Denton, Lupini, Cozzani*) and are used on both dental arches. Direct TADs are inserted directly by the dentist with minimal time and difficulty, they do not require a laboratory-built orthodontic apparatus or an insertion template, which is however made available to the dentist. Direct TADs are divided into two different families, i.e., those designed for insertion into the alveolar bone and those designed for insertion into the extra-alveolar bone and represent an effective, ergonomic and inexpensive approach in fixed and aligner orthodontics, in particular "en *masse"* or sequential retraction of the upper dental arch, *"en masse"* or sequential disto-tipping of the lower dental arch, upper molar distalization, disinclusion of canines and molars, extrusion and intrusions, pre-prosthetic uprighting and specific minimally invasive management of the position of individual teeth, such as lingualization or vestibularization in cases of scissor or cross bite.

Indirect TADs are screws used for fixing a laboratory-made orthodontic apparatus to a subject's palate. Indirect TADs are dedicated exclusively to the upper jaw bone and represent the gold standard for the skeletal expansion of the jaw bone at the end of growth and for other selected clinical conditions, such as the *"en masse"* protraction of the upper teeth for space closure in cases of agenesis or asymmetric movements of the upper dental arch. Indirect TADs require cone-beams, a digital design, and a template, therefore the biological and economic price is higher than that of direct TADs. However, they are preferable for certain clinical conditions. Screws defined as indirect TADs must be positioned inside the oral cavity, particularly in the palatal vault (anterior palate, elective site), while screws defined as direct TADs are basically inserted in the interradicular space between two adjacent teeth. All these screws therefore comprise a tip, a threaded shank, which in use is inserted into the bone tissue, and a head, which comprises a first portion, or trans-mucosal neck, which develops from the threaded shank, and a second portion, or extra-mucosal portion, which is the fully exposed part of the head, on which, when the screw is properly placed, the traction and/or thrust forces are applied.

In particular, the second portion, or extra-mucosal portion, of the screw head is configured to receive a metal orthodontic wire sector of appropriate size and to allow anchoring a ligature made of metal wire wrapped around itself or an elastic chain for orthodontic traction, these elements having the function of exerting a corrective action on the tooth or teeth that must be repositioned. Furthermore, the second portion of the screw head includes manoeuvring means for screwing and unscrewing the screw into and out of the bone tissue.

Typically, the metal orthodontic wire sector is fixed to the orthodontic anchor screw using a through hole in the second portion of the screw head, thus ensuring the static hold necessary to develop the traction and/or thrust forces adapted to bring the treated tooth or teeth into the proper position. The elastic chain is anchored by stretching it and hooking an eyelet to the head of the screw, whereas any spring is activated through extension and stabilised by using a small portion of metal wire.

The main drawback of such known orthodontic screws for extra-alveolar skeletal anchorage is due to the fact that the through holes provided to accommodate the metal orthodontic wire sector have a cross section having diameter and shape unsuitable for all the purposes they should serve; in other words, not all the metal orthodontic wire sectors that have to be inserted therein to transfer forces at a distance enter the grooves easily and precisely, which is essential for the good functioning of the orthodontic apparatus. Specifically, if a metal orthodontic wire sector is to be secured to the head of the orthodontic screw for creating certain forces at a distance therefrom (levers or translators of the point of application of the force), such an operation is complicated and laborious for the dentist to carry out.

Another drawback of the known orthodontic screws for extra-alveolar skeletal anchorage is that they are made of surgical steel, a material which has poor cutting properties, whereby the screw does not penetrate the bone easily and, when subjected to significant forces, tends to bend.

A further drawback of the known orthodontic screws for extra-alveolar skeletal anchorage is that the surface of the neck area (where the screw, once inserted, is expected to be in contact with the mucosa) has an angular and irregular morphology, and this can therefore cause injury or sores of such soft passage tissues. Furthermore, the very geometry of the extra-mucosal portion of the screw head may cause discomfort and/or injury to the tongue or the inside of the lips and cheeks of the patient, thus causing painful lesions or sores.

### Summary of the invention

The main object of the present invention is to provide an orthodontic screw for extra-alveolar skeletal anchorage, configured so as to simply and effectively solve the above-mentioned drawbacks with reference to the known orthodontic screw for extra-alveolar skeletal anchorage. More in particular, the main object of the present invention is to provide an orthodontic screw for extra-alveolar skeletal anchorage, configured so as to be easily and conveniently placed inside the oral cavity, while simultaneously ensuring a correct control of the traction and/or thrust forces applied to the tooth or teeth to be treated.

Another object of the present invention is to provide an orthodontic screw for extra-alveolar skeletal anchorage, configured so as to facilitate adjustment operations of the orthodontic apparatus or of parts thereof, specifically metal orthodontic wire sectors acting as levers or translators of the application point of the force, to distribute forces on the teeth to be repositioned which are congruent with the orthodontic movement foreseen for them.

Yet another object of the present invention is to provide an orthodontic screw for extra-alveolar skeletal anchorage, configured so as to be biocompatible with the mucosal and bone tissues with which it materially comes into contact.

Another object of the present invention is to provide an orthodontic screw for extra-alveolar skeletal anchorage configured so as to be completely safe for the patient, i.e., such as not to cause lesions or sores to the tongue or oral mucosa.

Yet another object of the present invention is to provide an orthodontic screw for extra-alveolar anchorage, configured to have a good cutting capacity, to facilitate insertion into the extra-alveolar bone by the dentist and not undergo deformations under load, making it easier to remove at the end of use.

Last but not least, an object of the present invention is to provide an orthodontic screw for extra-alveolar skeletal anchorage which is easy to make and has low production costs.

These and other objects, which will more apparent from the following description, are achieved by an orthodontic screw for extra-alveolar skeletal anchorage having the features set forth in the attached independent claim 1. Preferred features of the orthodontic screw for extra-alveolar skeletal anchorage are offset forth in the dependent claims.

The invention therefore relates to an orthodontic anchor screw for extra-alveolar skeletal anchorage comprising a threaded shank, configured to be screwed into a bone tissue and a head which, in use, protrudes from the bone tissue and comprises an engagement portion for orthodontic traction and/or thrust elements.

The orthodontic anchor screw is characterized in that a through opening is formed in the engagement portion for orthodontic traction and/or thrust elements, wherein said through opening extends substantially along a direction orthogonal to a longitudinal axis of the anchor screw and comprises a section having a polygonal cross section, for stably receiving an orthodontic sector.

Thanks to this combination of features, and in particular thanks to the fact of providing a through opening having at least one central portion of polygonal (preferably rectangular) cross section, it is possible to obtain a screw, which allows an easy and precise insertion of metal orthodontic wire sectors, which have to be connected to the screw to transfer forces at a distance therefrom (through levers or translators of the application point of the force). This is essential for the proper functioning of the orthodontic apparatus. Furthermore, the orthodontic screw thus conceived can be easily and conveniently placed inside the oral cavity by a dentist, while simultaneously ensuring a proper control of the traction and/or thrust forces applied to the tooth or teeth to be treated.

### Brief description of the drawings

Further features and advantages of the present invention will become more evident from the following detailed description of a preferred, but not exclusive, embodiment thereof, presented below by way of non-limiting example with the aid of the attached drawings. In the drawings:

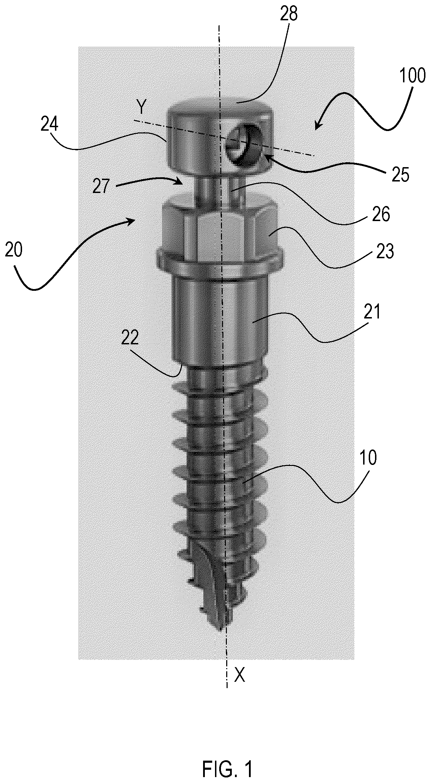

- Figure 1 schematically shows a perspective view of an orthodontic screw for extra-alveolar skeletal anchorage according to the present invention;
- Figure 2 schematically shows a partially sectional front view of the orthodontic anchor screw of Figure 1;
- Figure 2A schematically shows an enlarged view of the circled detail of Figure 2;
- Figure 3 schematically shows a top view (i.e., in the direction of its major axis when observed from the head) of the orthodontic anchor screw of Figure 1;
- Figure 4 schematically shows a bottom view (i.e., in the direction of its major axis when observed from the tip) of the orthodontic anchor screw of Figure 1; and
- Figure 5 schematically shows a partially sectional side view of the orthodontic anchor screw of Figure 1.

### Detailed description of preferred embodiments of the invention

With reference to the Figures, an orthodontic screw for extra-alveolar skeletal anchorage according to a preferred embodiment of the present invention is illustrated therein.

The anchor screw, generally indicated by reference numeral 100, comprises a threaded shank 10, which extends along a longitudinal axis X and is intended to be screwed into bone tissue inside the oral cavity of a patient.

The anchor screw 100 is made of titanium, which is a highly biocompatible material, and thus extremely safe for the patient. Furthermore, titanium is an extremely stable, highly flexible material and has a high cutting capacity to facilitate insertion into the extra-alveolar bone and avoid deformations under load, thus making it easier to remove the screw at the end of use. Preferably, the anchor screw 100 is of the self-drilling and self-tapping type, so that it is not necessary to make a lead-in hole in the bone tissue before proceeding with the insertion of the threaded shank 10 into the latter. This advantageously facilitates the insertion of the anchor screw 100 and, at the same time, allows to reduce intervention times.

The anchor screw 100 further comprises a head 20, made in a single piece with the threaded shank 10 and connected to the threaded shank 10 by means of a connecting portion 21 preferably having a cylindrical shape. More in particular, the connecting portion 21 is connected to the threaded shank 10 by means of an annular surface 22. The connecting portion 21 is suitable to be inserted into the oral mucosa and remain in contact therewith in a non-traumatic manner when the threaded shank 20 is screwed into the bone tissue, so that only a small portion of the head 20 of the anchor screw 100 protrudes from the oral mucosa. It follows that the anchor screw 100 is advantageously minimally traumatic and does not cause any discomfort to the patient. In an embodiment, instead of being cylindrical, the connecting portion can be tapered in the direction of the threaded shank 10.

The head 20 is also provided with a grip portion 23 for a tool suitable for screwing and unscrewing the anchor screw into and from the bone tissue. Such a grip portion preferably has a polygonal cross section for coupling a key.

The head 20 further comprises an engagement portion 24 for orthodontic elements, specifically for a metal orthodontic wire sector (not shown), used as a lever or translator of the application point of the force to the teeth. In particular, a through opening 25 is formed in the engagement portion 24, in which the metal orthodontic wire sector is received and retained.

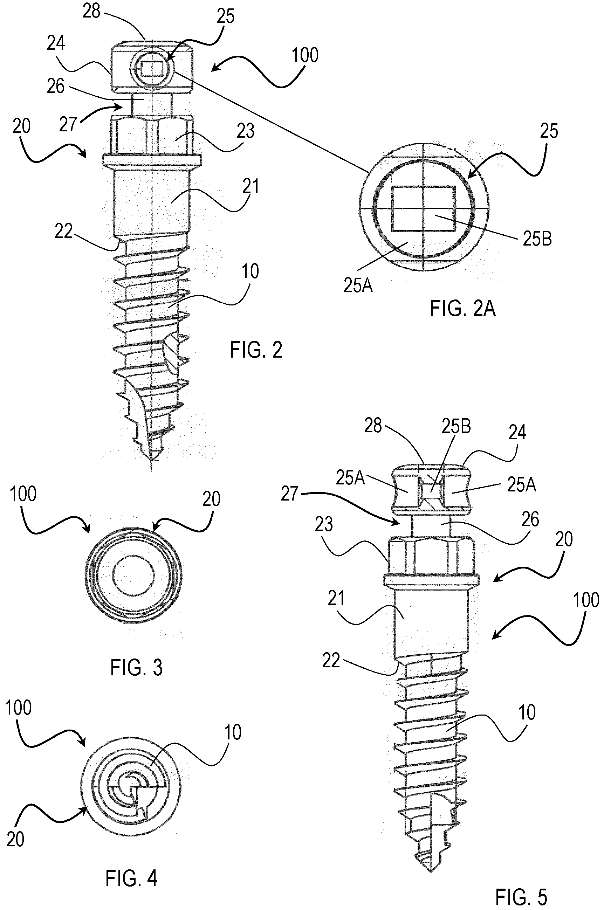

In particular, as shown in detail in Figure 5, the through opening 25 extends substantially along a direction Y orthogonal to the longitudinal axis X of the anchor screw 100 and comprises two terminal sections 25A having a circular cross section and a central section 25B having a polygonal, preferably rectangular, cross section.

The two terminal sections 25A with circular cross section of the through opening 25 have a cross-sectional area greater than that of the central section with rectangular cross section 25B. This has the advantage of acting as a lead-in which allows the metal orthodontic wire sector to be inserted into the through hole more easily and with less time spent by the operator. According to alternative embodiments, the through opening of the head can consist of a single terminal section having a circular cross section, followed by a section having a polygonal cross section or the section having a polygonal cross section can extend over the entire development of the through opening.

Between the tool grip portion 23 and the engagement portion 24 of the metal orthodontic wire sector, the head 20 of the anchor screw 100 further comprises a transverse narrowing portion 26, preferably having a substantially cylindrical shape. Between the grip portion 23 and the engagement portion 24 of the head 20, an annular seat 27 is thus delimited, at which a ligature consisting of metal wire wrapped around itself or an elastic chain for orthodontic traction is anchored.

The head 20 of the orthodontic anchor screw 100 has an upper surface 28 which is uniform, free of recesses or reliefs and provided with a curved profile so as not to cause, advantageously, lesions or sores to the tongue or oral mucosa, thus being completely safe for the patient.

Operationally, the orthodontic anchor screw 100, in particular its threaded shank 10, is screwed into the bone tissue inside a patient's oral cavity at the desired position. Subsequently, a metal orthodontic wire sector is introduced and held in the through opening 25 formed in the engagement portion 24. The passage of the metal wire sector inside the through opening 25 causes the sector to be retained d therein. In fact, in most cases, such an orthodontic sector has a polygonal (rectangular) cross section similar to the through opening and slightly smaller in size, whereby it can slide inside the through opening 25 and still remain sufficiently stable, thus facilitating the correct purposes of the orthodontic sector itself. Finally, if necessary, a ligature metal wire or a rubber chain with the proper elastic tension on an attachment (not shown) is fixed on a tooth to be repositioned and in the annular seat 27 delimited between the grip portion 23 and the engagement portion 24 of the head 20 of the orthodontic anchor screw 100.

From the description provided, the features of the orthodontic screw for extra-alveolar skeletal anchor of the present invention, as well as the related advantages, are apparent. In particular, the screw can be easily and conveniently placed inside the oral cavity, while ensuring proper control of the traction and/or thrust forces applied to the tooth or teeth to be treated, in some cases through a ligature metal wire wrapped around itself or a rubber chain which applies the proper elastic tension, in others through an orthodontic sector inserted into and stably secured in the through opening, which can act as a lever or translator of the application point of the force to the teeth. Furthermore, the orthodontic anchor screw is biocompatible and completely safe for the patient.

Finally, it is clear that the orthodontic anchor screw thus conceived is susceptible to many modifications and variations; furthermore, all the details can be replaced by technically equivalent elements.

## Claims

1. Orthodontic anchor screw (100) for extra-alveolar skeletal anchorage comprising a threaded shank (10) configured to be screwed into a bone tissue and a head (20), which, in use, protrudes from the bone tissue and comprises an engagement portion (24) for orthodontic traction and/or thrust elements;
**characterized in that** a through opening (25) is formed in said engagement portion (24) for orthodontic traction and/or thrust elements, wherein said through opening (25) extends substantially along a direction (Y) orthogonal to a longitudinal axis (X) of the anchor screw (100) and includes a section (25B) having a polygonal cross section, for stably receiving an orthodontic sector.

2. Orthodontic anchor screw (100) according to claim 1, wherein said through opening (25) has at least one terminal section (25A) having a circular cross section.

3. Orthodontic anchor screw (100) according to claim 2, wherein said through opening (25) has two terminal sections (25A) having a circular cross section, wherein said section (25B) having a polygonal cross section extends between said two terminal sections (25B) having a circular cross section.

4. Orthodontic anchor screw (100) according to claim 2 or 3, wherein said terminal sections (25A) having a circular cross section of the through opening (25) have a cross-sectional area greater than that of the section with polygonal section (25B).

5. Orthodontic anchor screw (100) according to claim 1, wherein said section (25B) having a polygonal cross section extends over the entire development of the through opening (25).

6. Orthodontic anchor screw (100) according to any one of the preceding claims, wherein said at least one section (25B) having a polygonal cross section has a rectangular cross section.

7. Orthodontic anchor screw (100) according to any one of the preceding claims, wherein said screw is made of titanium.

8. Orthodontic anchor screw (100) according to any one of the preceding claims, wherein the head (20) is provided with a grip portion (23), preferably having a polygonal cross section, for coupling a tool suitable for screwing and unscrewing the anchor screw into and from the bone tissue.

9. Orthodontic anchor screw (100) according to claim 8, wherein a portion (26) having a transverse narrowing is provided between the tool grip portion (23) and the orthodontic sector engagement portion (24) of the head (20), wherein the transverse narrowing portion (26) delimits an annular seat (27) for anchoring a ligature consisting of a metal wire wrapped around itself or an elastic chain for orthodontic traction.

10. Orthodontic anchor screw (100) according to any one of the preceding claims, comprising an upper surface (28) which is uniform and has a curved profile.
